# EUROPÄISCHE PATENTSCHRIFT

(11) **EP 0 744 131 B1**
(45) Veröffentlichungstag und Bekanntmachung des Hinweises auf die Patenterteilung: **24.10.2001**
(21) Anmeldenummer: 96108117.1
(22) Anmeldetag: 21.05.1996
(51) Int. Cl.: A23G 1/04, A23G 1/10, A23G 1/12, A23G 1/18

(54) **Verfahren zur Herstellung von Schokoladenmassen**
Process for making chocolate masses
Procédé de fabrication de masses de chocolat

(30) Priorität: 24.05.1995 DE 19518626
(43) Veröffentlichungstag der Anmeldung: 27.11.1996
(73) Patentinhaber: DIL Hygiene GmbH, 39104 Magdeburg (DE)
(72) Erfinder: Tscheuschner, Horst Dieter, Prof. Dr., 49610 Quakenbrück (DE); Franke, Knut, Dr., 01189 Dresden (DE)
(74) Vertreter: Uhlemann, Henry, Dipl.-Chem.

(56) Entgegenhaltungen:
- EP-A- 0 157 896
- DD-A- 114 504
- DE-A- 2 061 969
- DE-A- 2 614 237

## Beschreibung

Die Erfindung betrifft ein Verfahren zur Herstellung von Schokoladenmassen.

Bei den bislang bekannten Verfahren zur Herstellung von Schokoladenmassen werden die Hauptkomponenten Kakaomasse, Kristallzucker, gegebenenfalls Milchpulver, Emulgator und Geschmacksstoffe entsprechend der geforderten Rezeptur gemischt, über ein Vorwalzwerk (Zweiwalzwerk) vorzerkleinert und nachfolgend über ein Fünfwalzwerk auf Endfeinheit vermahlen. Das entstehende Walzgut ist danach flockig und pulverförmig. Die Umwandlung in eine fließfähige Schokoladenmasse erfolgt in einer sogenannten Conche. In der Conche wird die Schokoladenmasse mit Scherkräften mechanisch beansprucht bei einer Temperatur zwischen 50 bis 90 °C. Hierbei wird ein Teil der flüchtigen Bestandteile (Wasser, Essigsäure, weitere flüchtige Komponenten) ausgetrieben und die trockene, krümelige Struktur durch Strukturänderung in einen fließfähigen Zustand umgewandelt. Chemische Reaktionen zwischen den Rezepturkomponenten sowie zwischen diesen und Luftsauerstoff führen zur Verbesserung des Aromas der Masse. Die geforderte Endviskosität der Masse wird durch Zusatz von Kakaobutter und Lecithin eingestellt.

Diesem Verfahren ist nachteilig, daß ein hoher Energiebetrag erforderlich ist, um beim Conchieren der feinzerkleinerten, pulverförmigen Masse die Struktur zu ändern und eine fließfähige Schokoladenmasse herzustellen. Gleichzeitig erfordert der Conchierprozeß zur Entfeuchtung und Aromabildung der Masse viel Zeit und Energie.

Aufgabe der Erfindung ist deshalb die Schaffung eines Verfahrens zur Herstellung von Schokoladenmasse aus Kakaomasse, Zucker oder Zuckeraustauschstoffen, Kakaobutter, gegebenenfalls Milchpulver, Emulgator und Geschmacksstoffen, das die Strukturauflösungsarbeit weitestgehend reduziert und bei dem die Vorgänge des Stoffaustausches (Entfeuchtung, Entsäuerung usw.) und der Aromareaktionen verbessert werden.

Erfindungsgemäß wird die Aufgabe dadurch gelöst, daß zur Herstellung von Schokoladenmassen aus Kakaomasse, Zucker und/oder Zuckeraustauschstoffen, Kakaobutter, gegebenenfalls Milchpulver, Emulgator und Geschmacksstoffen
a) die Kakaomasse unter Zusatz von Zuckerlösung bei Temperaturen von 75 bis 120 °C unter Rühren und Frischluftzufuhr bis zu einer Massefeuchte kleiner 1,8 % vorbehandelt wird.

Zur Herstellung von milchfreier Schokoladenmasse werden
b) der Kristallzucker mit Kakaobutter, einem Teil der nach a) vorbehandelten Kakaomasse und gegebenenfalls mit Emulgator vermischt und auf Endfeinheit vermahlen und
c) die nach a) und b) erhaltenen Massen gemischt und unter Zusatz der weiteren Rezepturkomponenten bei Temperaturen von etwa 75 bis 120 °C einer mechanischen Scherbehandlung unterworfen.

Milchfreie Schokoladenmasse läßt sich nach einer zweiten, vorteilhaften Ausgestaltung der Erfindung so herstellen, daß nach dem ersten Verfahrensschritt a)
b) Kristallzucker mit Kakaobutter und der Gesamtmenge der nach Verfahrensschritt a) vorbehandelten Kakaomasse und gegebenenfalls mit Emulgator vermischt und auf Endfeinheit vermahlen und unter Zusatz der weiteren Rezepturkomponenten bei Temperaturen von 75 bis 120 °C einer mechanischen Scherbehandlung unterworfen wird.

Eine weitere vorteilhafte Ausgestaltung zur Herstellung milchfreier Schokoladenmasse besteht darin, daß nach dem ersten Verfahrensschritt a)
b) Kristallzucker und Kakaobutter und ein Teil der nach Verfahrensschritt a) vorbehandelten Kakaomasse vermischt, auf Endfeinheit vermahlen und unter Zusatz der weiteren Rezepturkomponenten bis auf die verbleibende nach a) vorbehandelte Kakaomasse bei Temperaturen von 75 bis 120 °C einer mechanischen Scherbehandlung unterworfen werden und danach der übrige Teil der nach Verfahrensschritt a) vorbehandelten Masse zugegeben und die gesamte Masse nachfolgend homogenisiert wird.

Zur Herstellung von Milchschokoladenmasse werden
d) die nach a) vorbehandelte Kakaomasse mit Milchpulver und gegebenenfalls Kakaobutter vermischt, auf Endfeinheit zerkleinert und nachfolgend bei Temperaturen zwischen 50 und 80 °C unter Rühren und Frischluftzufuhr bis zu einer Massefeuchte kleiner 1,8 % behandelt,
e) der Kristallzucker mit Kakaobutter, einem Teil der nach d) behandelten Kakaomilchpulvermasse und gegebenenfalls mit Emulgator vermischt, auf Endfeinheit vermahlen und
f) die nach d) und e) erhaltenen Massen gemischt und unter Zusatz der weiteren Rezepturkomponenten bei Temperaturen zwischen 50 bis 90 °C einer mechanischen Scherbehandlung unterworfen.

Milchschokolade läßt sich nach einer zweiten vorteilhaften Ausgestaltung der Erfindung so herstellen, daß nach dem ersten Verfahrensschritt a)
d) die nach a) vorbehandelte Kakaomasse mit Milchpulver und gegebenenfalls Kakaobutter vermischt, unzerkleinert oder auf Endfeinheit zerkleinert und nachfolgend bei Temperaturen zwischen 50 und 80 °C unter Rühren und Frischluftzufuhr bis zu einer Massefeuchte kleiner 1,8 % behandelt wird und
e) der Kristallzucker mit Kakaobutter und der Gesamtmenge der nach Verfahrensschritt d) behandelten Kakaomilchpulvermasse und gegebenenfalls mit Emulgator vermischt, auf Endfeinheit vermahlen und unter Zusatz der weiteren Rezepturkomponenten bei Temperaturen zwischen 50 bis 90 °C gemischt und einer mechanischen Scherbehandlung unterworfen wird.

Eine weitere vorteilhafte Ausgestaltung zur Herstellung von Milchschokolade besteht darin, daß nach dem ersten Verfahrensschritt a)
d) die nach a) vorbehandelte Kakaomasse mit Milchpulver und gegebenenfalls Kakaobutter vermischt, auf Endfeinheit zerkleinert und nachfolgend bei Temperaturen zwischen 50 und 80 °C unter Rühren und Frischluftzufuhr bis zu einer Massefeuchte kleiner 1,8 % behandelt wird und
e) der Kristallzucker mit Kakaobutter und einem Teil der nach Verfahrensschritt d) behandelten Kakaomilchpulvermasse und gegebenenfalls mit Emulgator vermischt, auf Endfeinheit vermahlen und unter Zusatz weiterer Rezepturkomponenten bei Temperaturen zwischen 50 und 90 °C einer mechanischen Scherbehandlung unterworfen wird und nachfolgend mit der übrigen nach d) vorbehandelten Masse homogenisiert wird.

Vorzugsweise wird nach Verfahrensschritt a) Kakaomasse und Zuckerlösung in einem Verhältnis von 95 Teilen Kakaomasse und bis zu 5 Teilen hochkonzentrierter Zuckerlösung eingesetzt. Bedingt durch die temperaturabhängige Löslichkeit des Zuckers in Wasser wird die Zuckerkonzentration so gewählt, daß der Zucker entsprechend der Verarbeitungstemperatur in Lösung bleibt und nicht auskristallisiert. Bei einer Verarbeitungstemperatur von 80 °C kann demzufolge eine Zuckerlösung aus 75 % Kristallzucker und 25 % Wasser angewandt werden.

Vorzugsweise erfolgt die Vorbehandlung nach Schritt a) des Verfahrens für die Dauer von mindestens einer Stunde. Die Behandlung nach Verfahrensschritt d) erfolgt vorzugsweise mindestens eine Stunde.

Die Vermischung der Rezepturbestandteile nach den Verfahrensschritten b) und e) der ersten und dritten Ausführungsform des erfindungsgemäßen Verfahrens erfolgt vorzugsweise mit einem solchen Anteil der nach den Verfahrensschritten a) und d) erhaltenen Massen, daß eine walzfähige Konsistenz der Masse unter Einsatz der für die Rezeptur erforderlichen Gesamtkristallzuckermenge und der weiteren Rezepturbestandteile erreicht wird.

Die mechanische Behandlung nach den Verfahrensschritten c) und f) der ersten Ausführungsform sowie b) und e) der jeweils beiden weiteren Ausführungsformen des erfindungsgemäßen Verfahrens erfolgt vorzugsweise bei einem hohen Schergefälle. Die nach den Verfahrensschritten c) und f) der ersten Ausführungsform sowie b) und e) der jeweils beiden weiteren Ausführungsformen des erfindungsgemäßen Verfahrens erhaltenen Schokoladenmassen können vorteilhaft unter Zusatz von Kakaobutter und/oder Emulgator bei einer Temperatur von 50 bis 100 °C unter mäßigem Rühren weiter veredelt werden.

Die nach Verfahrensschritt a) und d) behandelten Kakaomassen können bei einer Temperatur von 40 bis 80 °C zwischengelagert werden. Dies erleichtert die Verfahrensführung im technologischen Ablauf.

Zur Herstellung von Diabetikerschokolade wird in den Verfahrensschritten b) und e) der Kristallzucker durch Zuckeraustauschstoffe, wie z. Bsp. Sorbit, Fruktose oder Xylit ersetzt.

In einer bevorzugten Ausführungsform der Erfindung wird das Verfahren zur Herstellung milchfreier Schokolade so geführt, daß im ersten Verfahrensschritt ca. 95 Teile flüssige Kakaomasse mit 5 Teilen konzentrierter Zuckerlösung, bestehend aus 75 % Kristallzucker und 25 % Wasser, bei einer Temperatur von 80 °C vermischt werden. Unter ständigem Rühren wird diese Masse im Temperaturbereich von 75 °C bis 120 °C 4 bis etwa 12 h einer Präparation, d. h. Aromareaktion, Entfeuchtung, Entfernung flüchtiger Säuren etc., ausgesetzt. Die Entfeuchtung und Entfernung flüchtiger Säuren wird durch dosierte Zufuhr von Frischluft und Abfuhr von beladener Abluft unterstützt. Je nach gewünschtem Entfeuchtungs- und Entsäuerungsgrad kann der Luftaustausch verstärkt oder beendet werden, so daß nachfolgend hauptsächlich Aromareaktionen im Reaktor ablaufen. Die Feuchtigkeit, die zu Beginn der Behandlung bei 2,5 bis 3 % liegt, erreicht nach der Präparation Werte um 1,5 %. Die so präparierte Kakaomasse kann in einem Speichertank bei einer Temperatur zwischen 40 bis 80 °C zwischengelagert oder gleich mit nach Verfahrensschritt b) hergestellter Masse weiterverarbeitet werden.

Parallel oder im Nachgang zum Verfahrensschritt a) wird nach Verfahrensschritt b) entsprechend der Schokoladenrezeptur die erforderliche Kristallzuckermenge, ein Teil Kakaobutter und ein Teil der vorbehandelten Kakaomasse sowie gegebenenfalls als Emulgator Lecithin gemischt, so daß eine walzfähige Masse entsteht. Diese Masse wird nachfolgend vorzerkleinert und abschließend auf Endfeinheit feinzerkleinert.

Nach den Verfahrensschritten a) und b) nach der ersten Ausführungsform des erfindungsgemäßen Verfahrens zur Herstellung von milchfreier Schokoladenmasse erhaltene Massen werden gemischt und vorzugsweise in einer Intensivconche bei hohem Schergefälle unter Zusatz der restlichen Emulgatormenge und gegebenenfalls eines Teiles der Kakaobutter homogenisiert. Die Prozeßtemperatur beträgt hierbei 75 bis 120 °C. Die derart conchierte Masse kann in ein Rührwerk gegeben werden, wo die Fließeigenschaften nach vorheriger rheologischer Prozeßkontrolle und Zusatz von restlicher Kakaobutter und/oder Lecithin auf die Sollwerte eingestellt werden. Nach Bedarf kann die fertige Schokoladenmasse ca. 1 bis 5 h einer weiteren Wärmebehandlung bei 75 bis 100 °C unter mäßigem Rühren (weitere Aromareaktionen) unterzogen werden.

In einer bevorzugten Ausführungsform der Erfindung wird das Verfahren zur Herstellung von Milchschokolade so geführt, daß nach Verfahrensschritt a) 95 Teile flüssige Kakaomasse mit 5 Teilen konzentrierter Zuckerlösung, bestehend aus 75 % Kristallzucker und 25 % Wasser, bei einer Temperatur von 80 °C vermischt werden. Unter ständigem Rühren wird diese Masse im Temperaturbereich von 75 bis 120 °C 2 bis etwa 6 h einer Präparation, d. h. Aromareaktionen, Entfeuchtung, Entfernung flüchtiger Säuren etc. ausgesetzt. Die Entfeuchtung und Entfernung flüchtiger Säuren wird durch dosierte Zufuhr von Frischluft und Abfuhr beladener Luft unterstützt. Der Vorgang wird solange durchgeführt, bis die Feuchte der Masse im Bereich von etwa 1,8 bis 1,5 % liegt. Nachfolgend wird entsprechend Verfahrensschritt d) die laut Rezeptur vorgesehene Menge Milchpulver mit der nach dem ersten Verfahrensschritt vorbehandelten Kakaomasse sowie gegebenenfalls eines Teiles der Kakaobutter gemischt, so daß eine zähflüssige walzfähige Konsistenz entsteht. Die Masse wird nachfolgend einer Feinzerkleinerung auf Endfeinheit unterzogen und danach in einem Rührwerk oder Knetmischer bei Temperaturen zwischen 50 und 80 °C einer weiteren Entfeuchtung und weiterem Reaktionsprozeß für die Dauer von bis zu 6 h unterworfen, je nach angestrebter Geschmacksqualität. Durch gesteuerte Frischluftzufuhr und Abfuhr beladener Abluft wird die Masse auf eine Endfeuchte kleiner 1,8 % geführt.

Parallel oder im Nachgang zum Verfahrensschritt d) wird nach Verfahrensschritt e) der laut Rezeptur benötigte Kristallzucker unter Zusätzen eines Teiles flüssiger Kakaobutter und gegebenenfalls eines Teiles der nach d) hergestellten Kakaomilchpulvermasse sowie Lecithin gemischt, so daß eine walzfähige Massekonsistenz erreicht wird. Diese Masse wird in einer oder mehreren Stufen auf Endfeinheit zerkleinert.

Nachfolgend werden die nach den Verfahrensschritten d) und e) der ersten Ausführungsform des erfindungsgemäßen Verfahrens zur Herstellung von Milchschokolade hergestellten Massen entsprechend der angestrebten Rezeptur gemischt und unter Zusatz weiterer Rezepturkomponenten (Kakaobutter, Lecithin, Geschmacksstoffe) bei 50 bis 90 °C, vorzugsweise unter Einsatz einer Intensivconche bei hohen Schergefällen conchiert und homogenisiert. Bei Einsatz einer kontinuierlichen Hochscheranlage zur Homogenisierung kann zweckmäßig alternierend in Rührwerken die chargenweise Kontrolle der Fließeigenschaften und die Nachdosierung von Kakaobutter erfolgen.

Das erfindungsgemäße Verfahren zur Herstellung von Schokoladenmassen weist gegenüber bisherigen Verfahren folgende Vorzüge auf:
1. Die Kakaomasse wird durch Zusatz der Zuckerlösung und Wärmebehandlung den Stoffaustauschprozessen (Entfeuchtung, Entsäuerung, Sauerstoffzufuhr) und den Aromareaktionen zwischen Kakaomasse und Zucker unterworfen. Dadurch wird der spätere Conchierprozeß von den Stoffaustausch- und Reaktionsprozessen entlastet. Die Vorbehandlung der Kakaomasse nach dem ersten Verfahrensschritt und im Falle von Milchschokolade nach Verfahrensschritt d) umfaßt nur etwa 50 % der gesamten Schokoladenmasse. Hierdurch können der Energieeinsatz und die Anlagenkapazität deutlich reduziert werden. Die Viskosität der Masse ist bedeutend geringer als die der zu conchierenden Schokoladenmasse, wodurch auch ein spezifisch geringerer Energieeintrag zum Antrieb des Rührwerkes erreicht wird.
   Bei Herstellung milchhaltiger Schokolade wird nach Zumischen des Milchpulvers durch den Stoffaustausch zwischen Kakaomasse, Zucker und Milchpulver sowie die ablaufenden Reaktionen die Geschmacksqualität positiv beeinflußt.
2. Durch das erfindungsgemäße Verfahren wird der Conchierprozeß von der sonst erforderlichen Strukturänderungsarbeit stark entlastet (Zeit- und Energieeinsparung).
3. In den Verfahrensschritten c) und f) der jeweils ersten Ausführungsform sowie in den Verfahrensschritten b) und e) der jeweils beiden weiteren Ausführungsformen des erfindungsgemäßen Verfahrens kann bei Bedarf die Sollviskosität exakt eingestellt werden und erforderlichenfalls der Reaktionsprozeß zur Erzielung des gewünschten Hausgeschmacks fortgeführt werden. Dies dient einer verbesserten Qualität.

Anhand beigefügter Zeichnungen werden die Ausführungsbeispiele der Erfindung näher erläutert. Dabei zeigen:
- Fig. 1: Verfahrensschema milchfreie Schokolade
- Fig. 2: Verfahrensschema milchhaltige Schokolade

### Ausführungsbeispiel 1

### Herstellung milchfreier Schokolade

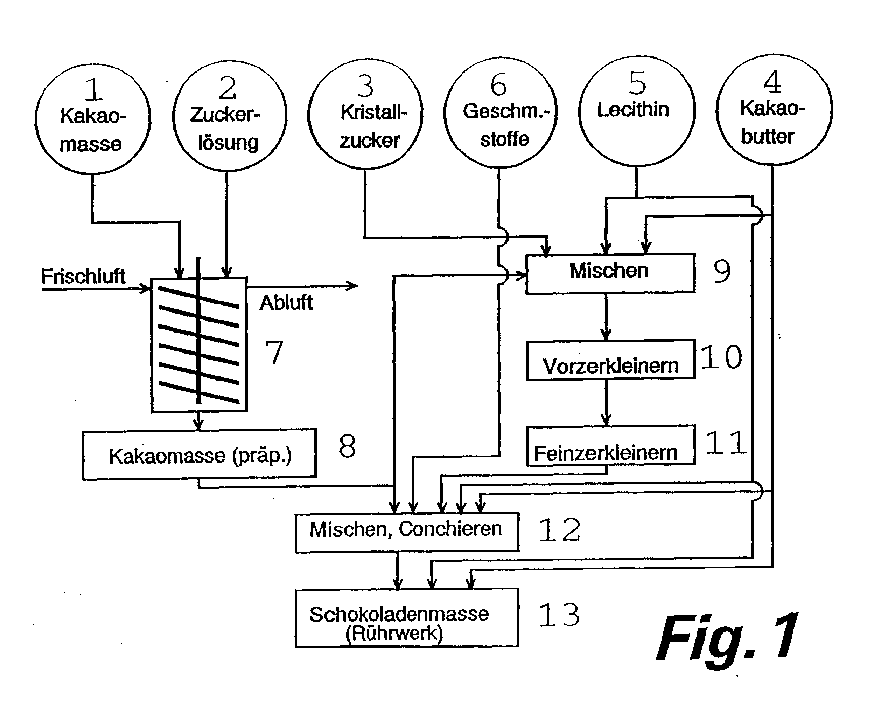

Anhand des Verfahrensschemas nach Fig. 1 wird ein Verfahren zur Herstellung milchfreier Schokolade beschrieben. Mit 1 bis 6 sind die für die Schokoladenrezeptur erforderlichen Bestandteile bezeichnet.

Zur Herstellung der Schokoladenmasse wird Kakaomasse (1) in ein beheizbares Rührwerk (7) gegeben und bei Erreichen einer Temperatur von ca. 80 °C Zuckerlösung (2), bestehend aus 75 % Kristallzucker und 25 % Wasser, der Kakaomasse im Verhältnis 5 Teile Zuckerlösung zu 95 Teilen Kakaomasse zugesetzt. Unter ständigem Rühren wird die Masse im Temperaturbereich von 75 °C bis 120 °C 4 bis 12 h einer Präparation, d.h. Aromareaktionen, Entfeuchtung, Entfernung flüchtiger Säuren etc. ausgesetzt. Temperatur und Dauer werden in Übereinstimmung mit den gewünschten Aromareaktionen eingestellt. Die Entfeuchtung und Entfernung flüchtiger Säuren erfolgt durch dosierte Zufuhr von Frischluft und Abfuhr von beladener Abluft. Je nach gewünschtem Entfeuchtungs- und Entsäuerungsgrad kann der Luftaustausch verstärkt oder beendet werden, so daß nachfolgend hauptsächlich Aromareaktionen im Rührwerk (7) ablaufen. Die Massefeuchte, die zu Beginn der Vorbehandlung bei 2,5 bis 3 % liegt, erreicht nach der Behandlung Werte um 1,5 %. Die fertig präparierte Kakaomasse (8) wird in einem Speichertank bei einer Temperatur zwischen 40 bis 80 °C zwischengelagert.

Im weiteren wird Kristallzucker (3), je nach gewünschter Rezeptur Kakaobutter (4), ein Teil der präparierten Kakaomasse (8) und ein Teil Lecithin (5) zur Schokoladengrundmasse angemischt (9), nachfolgend vorzerkleinert (10) und abschließend auf Endfeinheit feinzerkleinert (11). Die feinzerkleinerte Schokoladenmasse (11) wird mit der restlichen zur Rezeptur gehörenden, präparierten Kakaomasse (8) in einer Intensivconche (12) bei hohem Schergefälle unter Zusatz der rezeptgemäßen Lecithinmenge (5) für eine Dauer von 5 bis 25 min. homogenisiert. Die Prozeßtemperatur beträgt hierbei 75 bis 120 °C. Die fertigconchierte Masse wird in ein Rührwerk (13) gegeben, wo die Fließeigenschaften nach vorheriger rheologischer Prozeßkontrolle durch Zusatz von restlicher Kakaobutter und/oder Lecithin auf die Sollwerte eingestellt werden. Nach Bedarf kann die fertige Schokoladenmasse 1 bis 5 h einer weiteren Wärmebehandlung bei 75 bis 100 °C unter mäßigem Rühren (weitere Aromareaktionen) unterzogen werden.

### Ausführungsbeispiel 2

### Herstellung milchfreier Schokolade

Analog Ausführungsbeispiel 1 wird Kakaomasse und Zuckerlösung vorbehandelt und präpariert. Danach wird Kristallzucker, je nach gewünschter Rezeptur Kakaobutter, die Gesamtmenge der präparierten Kakaomasse und ein Teil Lecithin angemischt und auf Endfeinheit feinzerkleinert. Die feinzerkleinerte Schokoladenmasse wird in einer Intensivconche bei hohem Schergefälle unter Zusatz der rezeptgemäßen Lecithinmenge für eine Dauer von 5 bis 25 min. homogenisiert. Die Prozeßtemperatur beträgt hierbei 75 bis 120 °C. Die fertigconchierte Masse wird in ein Rührwerk gegeben, wo die Fließeigenschaften nach vorheriger rheologischer Prozeßkontrolle durch Zusatz von restlicher Kakaobutter und/oder Lecithin auf die Sollwerte eingestellt werden. Nach Bedarf kann die fertige Schokoladenmasse 1 bis 5 h einer weiteren Wärmebehandlung bei 75 bis 100 °C unter mäßigem Rühren (weitere Aromareaktionen) unterzogen werden.

### Ausführungsbeispiel 3

### Herstellung milchfreier Schokolade

Analog Ausführungsbeispiel 1 wird Kakaomasse und Zuckerlösung vorbehandelt und präpariert. Im weiteren wird Kristallzucker, je nach gewünschter Rezeptur Kakaobutter, ein Teil der präparierten Kakaomasse und ein Teil Lecithin zur Schokoladengrundmasse angemischt und auf Endfeinheit feinzerkleinert. Diese feinzerkleinerte Schokoladenmasse wird in einer Intensivconche bei hohem Schergefälle unter Zusatz der rezeptgemäßen Lecithinmenge für eine Dauer von 5 bis 25 min. einer mechanischen Scherbehandlung unterworfen. Danach wird die restliche zur Rezeptur gehörende, präparierte Kakaomasse zugegeben und die gesamte Masse nachfolgend homogenisiert.

Die Prozeßtemperatur beträgt hierbei 75 bis 120 °C. Die fertigconchierte Masse wird in ein Rührwerk gegeben, wo die Fließeigenschaften nach vorheriger rheologischer Prozeßkontrolle durch Zusatz von restlicher Kakaobutter und/oder Lecithin auf die Sollwerte eingestellt werden. Nach Bedarf kann die fertige Schokoladenmasse 1 bis 5 h einer weiteren Wärmebehandlung bei 75 bis 100 °C unter mäßigem Rühren (weitere Aromareaktionen) unterzogen werden.

### Ausführungsbeispiel 4

### Herstellung von Milchschokolade

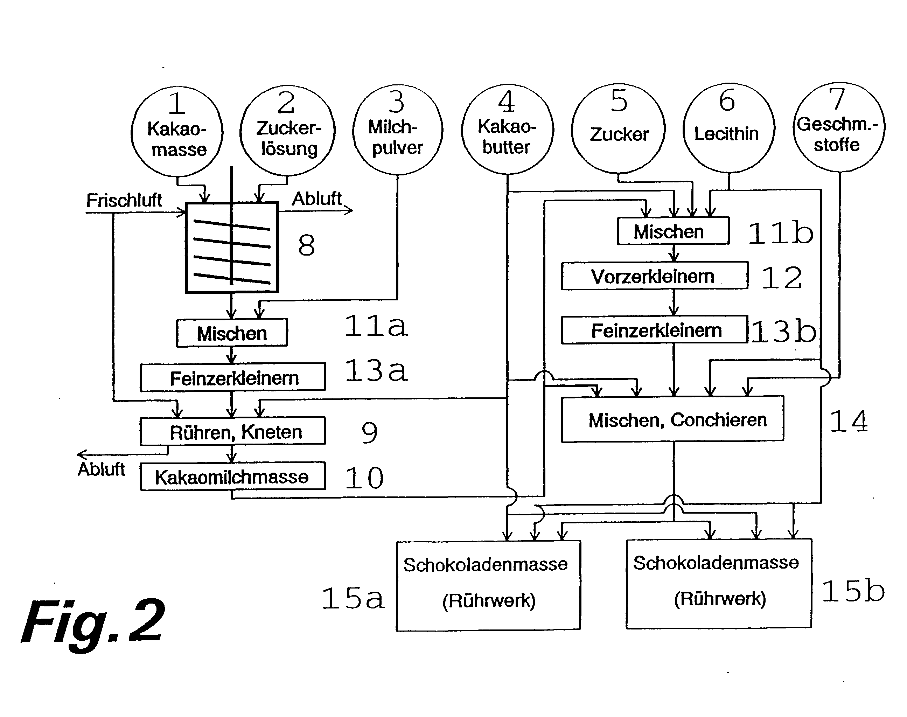

Anhand des Verfahrensschemas nach Fig. 2 wird ein Verfahren zur Herstellung von Milchschokolade beschrieben.

95 Teile Kakaomasse (1) werden in einem beheizbaren Rührwerk (8) vorgelegt. Dazu werden unter Rühren 5 Teile Zuckerlösung (2), bestehend aus 75 % Kristallzucker und 25 % Wasser, bei einer Temperatur von 80 °C zugesetzt. Unter ständigem Rühren wird die Masse im Temperaturbereich von 75 bis 120 °C 1 bis 6 h einer Präparation, d.h. Aromareaktionen, Entfeuchtung, Entfernung flüchtiger Säuren etc. ausgesetzt. Temperatur und Dauer werden in Übereinstimmung mit den gewünschten Aromareaktionen und dem Entfeuchtungsgrad (Endfeuchte kleiner 1,8 %) eingestellt.

Die Entfeuchtung und Entfernung flüchtiger Säuren erfolgt durch dosierte Zufuhr von Frischluft und Abfuhr von beladener Abluft. Je nach gewünschtem Entfeuchtungs- und Entsäuerungsgrad kann der Luftaustausch verstärkt oder beendet werden, so daß nachfolgend hauptsächlich Aromareaktionen im Rührwerk (8) ablaufen. Die Feuchtigkeit, die zu Beginn der Behandlung bei 2,5 bis 3 % liegt, erreicht nach der Behandlung Werte zwischen 1,8 bis 1,5 %.

Die so vorbehandelte Kakaomasse wird nachfolgend im Mischer (11a) mit der für die Rezeptur erforderlichen Menge Milchpulver (3) und mit einem Teil der Kakaobutter (4) gemischt, so daß eine zähflüssige walzfähige Konsistenz entsteht. Die Kakao-Milchpulvermasse wird einer Feinzerkleinerung auf Endfeinheit (13a) unterzogen und nachfolgend in einem Knetmischer bei Temperaturen zwischen 50 und 80 °C einer weiteren Entfeuchtung und einem Reaktionsprozeß für die Dauer von 1 bis 6 h unterworfen, je nach angestrebter Geschmacksqualität. Durch gesteuerte Frischluftzufuhr und Abfuhr beladener Abluft wird die Masse auf eine Endfeuchte kleiner 1,8 % entfeuchtet.

Parallel zum vorgenannten Arbeitsschritt wird der für die Rezeptur notwendige Kristallzucker mit Kakaobutter und einem Teil Lecithin (6) so gemischt (11b), daß eine walzfähige Massekonsistenz erreicht wird. Zur Geschmacksnuancierung kann der Masse im Kneter bis zu 50 % der vorbehandelten Kakaomilchpulvermasse zugesetzt werden. Nachfolgend wird die Kakaobutter-Zuckermasse vorzerkleinert (12) und danach auf Endfeinheit feinzerkleinert (13b). Das Walzgut wird nachfolgend mit der Kakao-milchpulvermasse (10) unter Zusatz von Lecithin (6), Aroma und Geschmacksstoffen (7) laut Rezeptur gemischt und unter Einsatz hoher Schergefälle homogenisiert (14). Bei Einsatz einer Batchconche werden abschließend die geforderten Soll-Fließeigenschaften durch Zusatz von Kakaobutter und/oder Lecithin eingestellt. Bei Einsatz einer kontinuierlichen Hochscheranlage zur Homogenisierung erfolgt alternierend in Rührwerken (15a bzw. 15b) die chargenweise Kontrolle der Fließeigenschaften und die Nachdosierung von Kakaobutter. Nach Bedarf kann die fertige Schokoladenmasse 1 bis 5 h einer weiteren Wärmebehandlung bei 50 bis 80 °C unter mäßigem Rühren (weitere Aromareaktionen) unterzogen werden.

### Ausführungsbeispiel 5

### Herstellung von Milchschokolade

Analog Ausführungsbeispiel 4 wird Kakaomasse und Zuckerlösung vorbehandelt und präpariert. Die so vorbehandelte Kakaomasse wird nachfolgend im Mischer mit der für die Rezeptur erforderlichen Menge Milchpulver und mit einem Teil der Kakaobutter gemischt, so daß eine zähflüssige Konsistenz entsteht. Die Kakao-Milchpulvermasse wird einer Feinzerkleinerung auf Endfeinheit unterzogen und nachfolgend in einem Knetrnischer bei Temperaturen zwischen 50 und 80 °C einer weiteren Entfeuchtung und einem Reaktionsprozeß für die Dauer von 1 bis 6 h unterworfen, je nach angestrebter Geschmacksqualität. Durch gesteuerte Frischluftzuführ und Abführ beladener Abluft wird die Masse auf eine Endfeuchte kleiner 1,8 % entfeuchtet.

Parallel zum vorgenannten Arbeitsschritt wird der für die Rezeptur notwendige Kristallzucker mit Kakaobutter und einem Teil Lecithin so gemischt, daß eine walzfähige Massekonsistenz erreicht wird. Nachfolgend wird die Kakaobutter-Zuckermasse auf Endfeinheit feinzerkleinert. Das Walzgut wird nachfolgend mit der Gesamtmenge der Kakao-Milchpulvermasse unter Zusatz von Lecithin, Aroma und Geschmacksstoffen laut Rezeptur gemischt und homogenisiert. Bei Einsatz einer Batchconche werden abschließend die geforderten Soll-Fließeigenschaften durch Zusatz von Kakaobutter und/oder Lecithin eingestellt. Bei Einsatz einer kontinuierlichen Hochscheranlage zur Homogenisierung erfolgt alternierend in Rührwerken die chargenweise Kontrolle der Fließeigenschaften und die Nachdosierung von Kakaobutter. Nach Bedarf kann die fertige Schokoladenmasse 1 bis 5 h einer weiteren Wärmebehandlung bei 50 bis 80 °C unter mäßigem Rühren (weitere Aromareaktionen) unterzogen werden.

### Ausführungsbeispiel 6

### Herstellung von Milchschokolade

Analog Ausführungsbeispiel 4 wird Kakaomasse und Zuckerlösung vorbehandelt und präpariert. Die so vorbehandelte Kakaomasse wird nachfolgend im Mischer mit der für die Rezeptur erforderlichen Menge Milchpulver und mit einem Teil der Kakaobutter gemischt, so daß eine zähflüssige Konsistenz entsteht. Die Kakao-Milchpulvermasse wird einer Feinzerkleinerung auf Endfeinheit unterzogen und nachfolgend in einem Knetmischer bei Temperaturen zwischen 50 und 80 °C einer weiteren Entfeuchtung und einem Reaktionsprozeß für die Dauer von 1 bis 6 h unterworfen, je nach angestrebter Geschmacksqualität. Durch gesteuerte Frischluftzufuhr und Abführ beladener Abluft wird die Masse auf eine Endfeuchte kleiner 1,8 % entfeuchtet.

Parallel zum vorgenannten Arbeitsschritt wird der für die Rezeptur notwendige Kristallzucker mit Kakaobutter und einem Teil Lecithin so gemischt, daß eine walzfähige Massekonsistenz erreicht wird. Dieser Masse wird im Kneter bis zu 50 % der vorbehandelten Kakaomilchpulvermasse zugesetzt. Nachfolgend wird die Kakaobutter-Zuckermasse auf Endfeinheit feinzerkleinert. Diese feinzerkleinerte Schokoladenmasse wird in einer Intensivconche bei hohem Schergefälle unter Zusatz der rezeptgemäßen Lecithinmenge für eine Dauer von 5 bis 25 min. einer mechanischen Scherbehandlung unterworfen. Danach wird die restliche zur Rezeptur gehörende, präparierte Kakaomilchpulvermasse zugegeben und die gesamte Masse nachfolgend homogenisiert. Bei Einsatz einer Batchconche werden abschließend die geforderten Soll-Fließeigenschaften durch Zusatz von Kakaobutter und/oder Lecithin eingestellt. Bei Einsatz einer kontinuierlichen Hochscheranlage zur Homogenisierung erfolgt alternierend in Rührwerken die chargenweise Kontrolle der Fließeigenschaften und die Nachdosierung von Kakaobutter. Nach Bedarf kann die fertige Schokoladenmasse 1 bis 5 h einer weiteren Wärmebehandlung bei 50 bis 80 °C unter mäßigem Rühren (weitere Aromareaktionen) unterzogen werden.

Die vorgenannten Verfahren zur Herstellung von Milchschokolade weisen gegenüber bisherigen Verfahren folgende Vorteile auf:

Die Kakaomasse wird durch Zusatz von Zuckerlösung und Wärmebehandlung, den Stoffaustauschprozessen (Entfeuchtung, Entsäuerung, Sauerstoffzufuhr) und Aromareaktionen zwischen Kakaomasse und Zucker sowie nach Zumischen des Milchpulvers auch den Reaktionen zwischen Kakaomasse, Zucker und Milchpulver ausgesetzt, so daß die Geschmacksqualität positiv beeinflußt wird. Da die Entfeuchtungs- und Reaktionsprozesse lediglich bei Kakaomasse, Milchpulver und einem sehr kleinen Anteil Zucker erfolgen, braucht nur ca. 50 % der Gesamtschokoladenmasse den langwierigen Entfeuchtungs- und Aromabildungsprozessen ausgesetzt werden. Hierdurch resultieren Energieeinsparungen und eine Reduzierung der Anlagenkapazität. Durch die Vermahlung des Zuckers mit der Kakaobutter und gegebenenfalls eines kleinen Anteiles der vorbehandelten Kakaomilchpulvermasse bilden sich nach dem Zerkleinerungsprozeß nur wenig Agglomerate aus den Feststoffteilchen. Die beim nachfolgenden Conchieren bisher erforderliche Energie zur Auflösung der Teilchenagglomerate kann dadurch deutlich reduziert werden. Der Conchierprozeß mit allen Rezepturbestandteilen vereinfacht sich durch die vorbehandelte Kakaomilchpulvermasse bezüglich Entfeuchtungs-, Entsäuerungs- und Aromabildungsprozesse. Hierdurch kann die ursprüngliche Conchierzeit drastisch reduziert werden, wodurch es zur Reduzierung von Energie und Anlagenkapazität kommt. Aroma und Fließeigenschaften können gezielter gesteuert werden.

## Patentansprüche

1. Verfahren zur Herstellung von Schokoladenmassen aus Kakaomasse, Zucker und/oder Zuckeraustauschstoffen, Kakaobutter, gegebenenfalls Milchpulver, Emulgator und Geschmacksstoffen, **dadurch gekennzeichnet, daß**
a) die Kakaomasse unter Zusatz von Zuckerlösung bei Temperaturen von 75 bis 120 °C unter Rühren und Frischluftzufuhr bis zu einer Massefeuchte kleiner 1,8 % vorbehandelt wird und
entweder im Falle der Herstellung von milchfreier Schokoladenmasse
b) Kristallzucker mit Kakaobutter, einem Teil der nach a) vorbehandelten Kakaomasse und gegebenenfalls mit Emulgator vermischt und auf Endfeinheit vermahlen wird und
c) die nach a) und b) erhaltenen Massen gemischt und unter Zusatz der weiteren Rezepturkomponenten bei Temperaturen von etwa 75 bis 120 °C einer mechanischen Scherbehandlung unterworfen werden,
oder im Falle der Herstellung von Milchschokolade
d) die nach a) vorbehandelte Kakaomasse mit Milchpulver und gegebenenfalls Kakaobutter vermischt, auf Endfeinheit zerkleinert und nachfolgend bei Temperaturen zwischen 50 und 80 °C unter Rühren und Frischluftzuführ bis zu einer Massefeuchte kleiner 1,8 % behandelt wird,
e) der Kristallzucker mit Kakaobutter, einem Teil der nach d) behandelten Kakaomilchpulvermasse und gegebenenfalls mit Emulgator vermischt, auf Endfeinheit vermahlen wird und
f) die nach d) und e) erhaltenen Massen gemischt und unter Zusatz der weiteren Rezepturkomponenten bei Temperaturen zwischen 50 bis 90 °C einer mechanischen Scherbehandlung unterworfen werden.

2. Verfahren nach Anspruch 1, **dadurch gekennzeichnet, daß** nach dem ersten Verfahrensschritt a) zur Herstellung von milchfreier Schokoladenmasse
b) Kristallzucker mit Kakaobutter und der Gesamtmenge der nach Verfahrensschritt a) vorbehandelten Kakaomasse und gegebenenfalls mit Emulgator vermischt und auf Endfeinheit vermahlen und unter Zusatz der weiteren Rezepturkomponenten bei Temperaturen von 75 bis 120 °C einer mechanischen Scherbehandlung unterworfen wird.

3. Verfahren nach Anspruch 1, **dadurch gekennzeichnet, daß** nach dem ersten Verfahrensschritt a) zur Herstellung von milchfreier Schokoladenmasse
b) Kristallzucker und Kakaobutter und ein Teil der nach Verfahrensschritt a) vorbehandelten Kakaomasse vermischt, auf Endfeinheit vermahlen und unter Zusatz der weiteren Rezepturkomponenten bei Temperaturen von 75 bis 120°C einer mechanischen Scherbehandlung unterworfen werden und danach der übrige Teil der nach Verfahrensschritt a) vorbehandelten Masse zugegeben und die gesamte Masse nachfolgend homogenisiert wird.

4. Verfahren nach Anspruch 1, **dadurch gekennzeichnet, daß** nach dem ersten Verfahrensschritt a) zur Herstellung von Milchschokoladenmasse
d) die nach a) vorbehandelte Kakaomasse mit Milchpulver und gegebenenfalls Kakaobutter vermischt, unzerkleinert oder auf Endfeinheit zerkleinert und nachfolgend bei Temperaturen zwischen 50 und 80 °C unter Rühren und Frischluftzufuhr bis zu einer Massefeuchte kleiner 1,8 % behandelt und
e) der Kristallzucker mit Kakaobutter und der Gesamtmenge der nach Verfahrensschritt d) behandelten Kakaomilchpulvermasse und gegebenenfalls mit Emulgator vermischt, auf Endfeinheit vermahlen und unter Zusatz der weiteren Rezepturkomponenten bei Temperaturen zwischen 50 bis 90 °C einer mechanischen Scherbehandlung unterworfen und homogenisiert wird.

5. Verfahren nach Anspruch 1, **dadurch gekennzeichnet, daß** nach dem ersten Verfahrensschritt a) zur Herstellung von Milchschokoladenmasse
d) die nach a) vorbehandelte Kakaomasse mit Milchpulver und gegebenenfalls Kakaobutter vermischt, auf Endfeinheit zerkleinert und nachfolgend bei Temperaturen zwischen 50 und 80 °C unter Rühren und Frischluftzufuhr bis zu einer Massefeuchte kleiner 1,8 % behandelt wird und
e) der Kristallzucker mit Kakaobutter und einem Teil der nach Verfahrenschritt d) behandelten Kakaomilchpulvermasse und gegebenenfalls mit Emulgator vermischt, auf Endfeinheit vermahlen und unter Zusatz weiterer Rezepturkomponenten bei Temperaturen zwischen 50 und 90 °C einer mechanischen Scherbehandlung unterworfen wird und nachfolgend mit der übrigen nach Verfahrensschritt d) vorbehandelten Masse homogenisiert wird.

6. Verfahren nach Anspruch 1, **dadurch gekennzeichnet, daß** die Kakaomasse und die Zuckerlösung in einem Verhältnis von 95 Teilen Kakaomasse und bis zu 5 Teilen hochkonzentrierter Zuckerlösung vermischt werden.

7. Verfahren nach Anspruch 1, **dadurch gekennzeichnet, daß** die Vorbehandlung nach Schritt a) des Verfahrens für die Dauer von mindestens einer Stunde erfolgt.

8. Verfahren nach einem der Ansprüche 1, 4 oder 5 **dadurch gekennzeichnet, daß** die Behandlung nach Verfahrensschritt d) für die Dauer von mindestens einer Stunde erfolgt.

9. Verfahren nach Anspruch 1 oder 5, **dadurch gekennzeichnet, daß** nach den Verfahrensschritten b) und e) die Vermischung der Rezepturbestandteile mit einem solchen Anteil der nach den Verfahrensschritten a) bzw. d) erhaltenen Massen erfolgt, daß eine walzfähige Konsistenz der Masse unter Einsatz der für die Rezeptur erforderlichen Gesamtkristallzuckermenge entsteht.

10. Verfahren nach Anspruch 1, **dadurch gekennzeichnet, daß** die mechanische Scherbehandlung nach den Verfahrensschritten c) und f) bei einem hohen Schergefälle erfolgt.

11. Verfahren nach einem der Ansprüche 2 bis 5, **dadurch gekennzeichnet, daß** die mechanische Scherbehandlung nach den Verfahrensschritten b) und e) bei einem hohen Schergefälle erfolgt.

12. Verfahren nach Anspruch 1, **dadurch gekennzeichnet, daß** die nach Verfahrenschritt c) und f) erhaltene Schokoladenmasse unter Zusatz von Kakaobutter und/oder Emulgator bei einer Temperatur von 50 bis 100 °C unter mäßigem Rühren weiter veredelt wird.

13. Verfahren nach einem der Ansprüche 2 bis 5, **dadurch gekennzeichnet, daß** die nach Verfahrenschritt b) und e) erhaltene Schokoladenmasse unter Zusatz von Kakaobutter und/oder Emulgator bei einer Temperatur von 50 bis 100 °C unter mäßigem Rühren weiter veredelt wird.

14. Verfahren zur Herstellung von Schokoladenmassen nach einem der Ansprüche 1 bis 5, **dadurch gekennzeichnet, daß** die nach Verfahrensschritt a) und d) behandelten Kakaomassen bei einer Temperatur von 40 bis 80 °C zwischengelagert werden.

15. Verfahren zur Herstellung von Schokoladenmassen für Diabetiker nach einem der Ansprüche 1 bis 5, **dadurch gekennzeichnet, daß** in den Verfahrenschritten b) und e) der Kristallzucker durch Zuckeraustauschstoffe ersetzt wird.

## Claims

1. Process for the manufacture of chocolate compounds from cocoa mass, sugar and/or sugar substitutes, cocoa butter, possibly milk powder, emulsifier and flavouring substances **characterized in that**
a) the cocoa mass is pretreated while adding sugar solution by agitating and feeding fresh air at temperatures of 75 to 120°C to a mass humidity smaller than 1.8% and either, in case of the manufacture of a milk-free chocolate compound
b) crystallized sugar is mixed with cocoa butter, a portion of the cocoa mass pretreated according to a) and, possibly, emulsifier and ground to final fineness and
c) the compounds obtained according to a) and b) are mixed and, while adding the other components of the formulation, are subjected to a mechanical shearing treatment at temperatures of about 75 to 120°C, or, in case of the manufacture of milk chocolate.
d) the cocoa mass pretreated according to a) is mixed with milk powder and, possibly, cocoa butter, comminuted to final fineness and then treated at temperatures of 75 to 120°C by agitating and feeding fresh air to a mass humidity smaller than 1.8%,
e) the crystallized sugar is mixed with cocoa butter, a portion of the cocoa milk powder compound treated according to d) and, possibly, emulsifier, ground to final fineness and
f) the compounds obtained according to d) and e) are mixed and, while adding the other components of the formulation, are subjected to a mechanical shearing treatment at temperatures between 50 and 90°C.

2. Process to Claim 1 **characterized in that** after the first processing step a) for the manufacture of a milk-free chocolate compound
b) crystallized sugar is mixed with cocoa butter and the entire quantity of the cocoa mass pretreated according to a) and, possibly, emulsifier and ground to final fineness and, while adding the other components of the formulation, is subjected to a mechanical shearing treatment at temperatures of 75 to 120°C.

3. Process to Claim 1 **characterized in that** after the first processing step a) for the manufacture of a milk-free chocolate compound
b) crystallized sugar and cocoa butter and a portion of the cocoa mass pretreated according to a) are mixed, ground to final fineness and, while adding the other components of the formulation, subjected to a mechanical shearing treatment at temperatures of 75 to 120°C and, then, the rest of the compound pretreated according to a) and, subsequently, the entire compound is homogenized.

4. Process to Claim 1 **characterized in that** after the first processing step a) for the manufacture of a milk chocolate compound
d) the cocoa mass pretreated according to a) is mixed with milk powder and, possibly, cocoa butter, not comminuted or comminuted to final fineness and subsequently treated at temperatures between 50 to 80°C by agitating and feeding fresh air to a mass humidity smaller than 1.8% and
e) the crystallized sugar is mixed with cocoa butter and the entire quantity of the cocoa milk powder compound treated according to d) and, possibly, emulsifier, ground to final fineness and, while adding the other components of the formulation, subjected to a mechanical shearing treatment at temperatures between 50 to 90°C and homogenized.

5. Process to Claim 1 **characterized in that** after the first processing step a) for the manufacture of a milk chocolate compound
d) the cocoa mass pretreated according to a) is mixed with milk powder and, possibly, cocoa butter, comminuted to final fineness and, subsequently, treated at temperatures between 50 to 80°C by agitating and feeding fresh air to a mass humidity smaller than 1.8% and
e) the crystallized sugar is mixed with cocoa butter and a portion of the cocoa milk powder compound treated according to d) and, possibly, emulsifier, ground to final fineness and, while adding other components of the formulation, subjected to a mechanical shearing treatment at temperatures between 50 to 90°C and, subsequently, homogenized with the rest of the compound treated according to d).

6. Process to Claim 1 **characterized in that** the cocoa mass and the sugar solution are mixed in a ratio of 95 parts of cocoa mass and up to 5 parts of highly concentrated sugar solution.

7. Process to Claim 1 **characterized in that** the pretreatment according to process step a) is carried out for a time period of at least one hour.

8. Process to any of the Claims 1, 4 or 5 **characterized in that** the treatment according to process step d) carried out for a time period of at least one hour.

9. Process to Claim 1 or 5 **characterized in that** after the process steps b) und e) mixing of the components of the formulation is carried out with such a portion of the compounds obtained according to the process steps a) or d), respectively, that a rollable consistency of the compound develops by adding of the entire quantity of crystallized sugar required for the formulation.

10. Process to Claim 1 **characterized in that** the mechanical shearing treatment according to the process steps c) and f) is carried out with a high shear gradient.

11. Process to any of the Claims 2 to 5 **characterized in that** the mechanical shearing treatment according to the process steps b) and e) is carried out with a high shear gradient.

12. Process to Claim 1 **characterized in that** the chocolate compound obtained according to process step c) and f) is further refined while adding cocoa butter and/or emulsifier by moderate agitating at a temperature of 50 to 100°C.

13. Process to any of the Claims 2 to 5 **characterized in that** the chocolate compound obtained according to process step b) and e) is further refined while adding cocoa butter and/or emulsifier by moderate agitating at a temperature of 50 to 100°C.

14. Process for the manufacture of chocolate compounds to any of the Claims 1 to 5 **characterized in that** the cocoa masses treated according to process step a) and d) remain in intermediate storage at a temperature of 40 to 80°C.

15. Process for the manufacture of chocolate compounds for diabetics to any of the Claims 1 to 5 **characterized in that** in the process steps b) und e) crystallized sugar is substituted with sugar substitutes.

## Revendications

1. Procédé pour la fabrication de masses de chocolat composées de pâte de cacao, de sucre et/ou de sucre de substitution, de beurre de cacao, et éventuellement de poudre de lait, d'émulsifiant et d'agents de sapidité, **caractérisé en ce que**
a) la masse de cacao est préparée en ajoutant une solution sucrée à des températures allant de 75 à 120° tout en mélangeant et en apportant de l'air frais jusqu'à atteindre une humidité de masse inférieure à 1,8% et
soit dans le cas de la fabrication de masse de chocolat sans lait
b) du sucre cristallisé est mélangé à du beurre de cacao, à une partie de la masse de cacao préparée selon le paragraphe a) et éventuellement à un émulsifiant et moulu très finement, et
c) les masses obtenues selon les paragraphes a) et b) sont mélangées et, avec adjonction des autres composants de la recette, sont soumises à un traitement de coupe mécanique à des températures d'environ 75 à 120°C,
soit dans le cas de la fabrication de chocolat au lait
d) la masse de cacao préparée selon le paragraphe a) est mélangée à de la poudre de lait et éventuellement à du beurre de cacao, réduite en une poudre très fine et ensuite est traitée à des températures comprises entre 50 et 80° tout en mélangeant et en apportant de l'air frais jusqu'à atteindre une humidité de masse inférieure à 1,8%,
e) du sucre cristallisé est mélangé à du beurre de cacao, à une partie de la masse de cacao et poudre de lait préparée selon le paragraphe d) et éventuellement à un émulsifiant et moulu très finement, et
f) les masses obtenues selon les paragraphes d) et e) sont mélangées et, avec adjonction des autres composants de la recette, sont soumises à un traitement de coupe mécanique à des températures comprises entre 50 et 90 °C.

2. Procédé selon la revendication 1, **caractérisé en ce qu**'après la première étape a) du procédé pour la fabrication de masse de chocolat sans lait b) du sucre cristallisé est mélangé à du beurre de cacao et à la quantité totale de la masse de cacao préparée selon l'étape a) du procédé et éventuellement à de l'émulsifiant, moulu très finement et, avec adjonction des autres composants de la recette, soumis à un traitement de coupe mécanique à des températures d'environ 75 à 120°C.

3. Procédé selon la revendication 1, **caractérisé en ce qu**'après la première étape a) du procédé pour la fabrication de masse de chocolat sans lait b) du sucre cristallisé et du beurre de cacao et une partie de la masse de cacao préparée selon l'étape a) du procédé sont mélangés, moulus très finement et, avec adjonction des autres composants de la recette, soumis à un traitement de coupe mécanique à des températures d'environ 75 à 120°C, et qu'ensuite la partie restante de la masse préparée selon le paragraphe a) du procédé est ajoutée et que la totalité de la pâte est ensuite homogénéisée.

4. Procédé selon la revendication 1, **caractérisé en ce qu**'après la première étape a) du procédé pour la fabrication de masse de chocolat au lait d) la masse de cacao préparée selon le paragraphe a) est mélangée à de la poudre de lait et éventuellement à du beurre de cacao, est ensuite, non réduite en poudre ou réduite en poudre très fine, traitée à des températures comprises entre 50 et 80° tout en mélangeant et en apportant de l'air frais jusqu'à atteindre une humidité de masse inférieure à 1,8%, et
e) le sucre cristallisé est mélangé à du beurre de cacao, à la totalité de la masse de cacao et de poudre de lait préparée selon le paragraphe d) du procédé et éventuellement à un émulsifiant, moulu très finement, et, avec adjonction des autres composants de la recette, soumis à un traitement de coupe mécanique à des températures comprises entre 50 et 90 °C puis homogénéisé.

5. Procédé selon la revendication 1, **caractérisé en ce qu**'après la première étape a) du procédé pour la fabrication de masse de chocolat au lait d) la masse de cacao préparée selon le paragraphe a) est mélangée à de la poudre de lait et éventuellement à du beurre de cacao, concassée très finement et est ensuite traitée à des températures comprises entre 50 et 80° tout en mélangeant et en apportant de l'air frais jusqu'à atteindre une humidité de masse inférieure à 1,8%, et
e) le sucre cristallisé est mélangé à du beurre de cacao et à une partie de la masse de cacao et de poudre de lait préparée selon le paragraphe d) du procédé et éventuellement à un émulsifiant, moulu très finement, et, avec adjonction d'autres composants de la recette, soumis à un traitement de coupe mécanique à des températures comprises entre 50 et 90 °C puis homogénéisé avec la masse préparée selon le paragraphe d) du procédé.

6. Procédé selon la revendication 1, **caractérisé en ce que** la masse de cacao et la solution sucrée sont mélangées dans un rapport de 95 parts de masse de cacao pour 5 parts maximum de solution sucrée hautement concentrée.

7. Procédé selon la revendication 1, **caractérisé en ce que** la préparation selon l'étape a) du procédé dure au moins une heure.

8. Procédé selon l'une des revendications 1, 4 ou 5, **caractérisé en ce que** la préparation selon l'étape d) du procédé dure au moins une heure.

9. Procédé selon la revendication 1 ou 5, **caractérisé en ce que** le mélange des composants de la recette, après les étapes b) et e) du procédé, est réalisé dans une telle proportion des masses obtenues selon les étapes a) et d) du procédé qu'on obtient une consistance de la pâte pouvant être passée au rouleau en utilisant toute la quantité de sucre cristallisé nécessaire à la recette.

10. Procédé selon la revendication 1, **caractérisé en ce que** la coupe mécanique selon les étapes c) et f) du procédé est réalisée avec un grand gradient de cisaillement.

11. Procédé selon l'une des revendications 2 à 5, **caractérisé en ce que** la coupe mécanique selon les étapes b) et e) du procédé est réalisé avec un grand gradient de cisaillement.

12. Procédé selon la revendication 1, **caractérisé en ce que** la masse de chocolat obtenue selon les étapes c) et f) du procédé est améliorée en ajoutant du beurre de cacao et/ou de l'émulsifiant à des températures de 50 à 100°C tout en remuant légèrement.

13. Procédé selon l'une des revendications 2 à 5, **caractérisé en ce que** la masse de chocolat obtenue selon les étapes b) et e) du procédé est améliorée en ajoutant du beurre de cacao et/ou de l'émulsifiant à des températures de 50 à 100°C tout en remuant légèrement.

14. Procédé pour la fabrication de masses de cacao selon l'une des revendications 1 à 5, **caractérisé en ce que** les masses de chocolat préparées selon les étapes a) et d) du procédé sont entreposées à des températures de 40 à 80°C.

15. Procédé pour la fabrication de masses de cacao pour diabétiques selon l'une des revendications 1 à 5, **caractérisé en ce que,** dans les étapes b) et e) du procédé, le sucre cristallisé est remplacé par du sucre de substitution.
